# EUROPEAN PATENT APPLICATION

(11) **EP 2 416 058 A1**
(43) Date of publication of application: **08.02.2012**
(21) Application number: 10774764.4
(22) Date of filing: 23.02.2010
(51) Int. Cl.: F21S 2/00, G02F 1/1333, G02F 1/13357, F21Y 101/02, F21Y 103/00

(54) **LIGHTING DEVICE, DISPLAY DEVICE, AND TELEVISION RECEIVER**

(30) Priority: 15.05.2009 JP 2009118931
(71) Applicant: Sharp Kabushiki Kaisha, Osaka-shi, Osaka 545-8522 (JP)
(72) Inventor: KUROMIZU, Yasumori, Osaka-shi, Osaka 545-8522 (JP)
(74) Representative: Müller-Boré & Partner Patentanwälte
(86) International application number: PCT/JP2010/052714
(87) International publication number: WO 2010/131505

(57) **Abstract**

A lighting device of the present invention provides substantially a uniform illumination brightness distribution without partially forming dark portions. A lighting device 12 of the present invention includes a longitudinal light source 17, a chassis 14 housing the light source 17 and having an opening 14b for light from the light source 17 to pass through, and an optical member 15a provided so as to face the light source 17 and cover the opening 14b. The optical member 15a has different light reflectance in a longitudinal direction of the light source 17.

## Description

### TECHNICAL FIELD

The present invention relates to a lighting device, a display device and a television receiver.

### BACKGROUND ART

A liquid crystal panel included in a liquid crystal display device does not emit light, and thus a backlight device is required as a separate lighting device. The backlight device is arranged behind the liquid crystal panel (i.e., on a side opposite from a display surface side). It includes a chassis having an opening on a liquid crystal panel side, a plurality of light sources (for example, cold cathode tubes) accommodated in the chassis as lamps, and an optical member (a diffuser plate and the like) provided at the opening of the chassis for efficiently directing light emitted from the light sources to a liquid crystal panel.

In such a backlight device including light sources emitting linear light, the optical member converts linear light into planer light to unify illumination light. However, if the linear light is not sufficiently converted into the planer light, striped lamp images are generated along the arrangement of the light sources, and this deteriorates display quality of the liquid crystal display device.

To obtain uniform illumination light from the backlight device, it is desirable to increase the number of light sources and reduce a distance between the adjacent light sources or to increase a diffusion rate of a diffuser plate, for example. However, increase of the number of light sources increases a cost of the backlight device and also increases power consumption. Increase of the diffusion rate of the diffuser plate fails to improve brightness and causes the problem that the number of light sources is required to be increased. A backlight device disclosed in Patent Document 1 has been known as one that suppresses power consumption and ensures uniform brightness.

The backlight device described in Patent Document 1 includes a diffuser plate provided on a light output side of a plurality of light sources. A dimming dot pattern having a light transmission rate (opening rate) from 62 to 71 % and haze from 90 to 99% is printed on the light diffuser plate. A dot diameter of each dot is great directly above the light sources and the dot diameter becomes smaller as is farther from the light source. With such a configuration, the light emitted from the light sources is efficiently used and the backlight device irradiates light having a sufficient brightness value and uniform brightness without increasing power consumption of the light source.

[Patent Document 1] Japanese Unexamined Patent Publication No. 2005-117023

### Problem to be Solved by the Invention

The linear light source used in the device disclosed in Patent Document 1 usually has non-luminous portions on its ends. The non-luminous portions do not emit light. In such a case, the light source has a different light emission amount in every portion in its longitudinal direction. In this backlight device, an area of each dot changes in a direction perpendicular to a longitudinal direction of the light source and the area of each dot is uniform in the longitudinal direction of the light source. Therefore, the brightness of illumination light can be controlled in the direction perpendicular to the longitudinal direction of the light source. However, it is hard to control the brightness of illumination light in the longitudinal direction of the light source. As a result, the light emitted from the light source is less likely to reach the edge portions of the diffuser plate close to the ends of the light source and dark portions may be partially formed there. The light source having a short length has a relatively short luminous portion, and if such a light source is used to achieve power saving of the backlight device, dark portions may be easily formed in the edge portions of the diffuser plate. Great brightness difference is caused between such a partially formed dark portion and a bright portion and the partially formed dark portion is easily recognized. This deteriorates quality of the lighting device and eventually lowers visibility of the display device.

### DISCLOSURE OF THE PRESENT INVENTION

The present invention was made in view of the foregoing circumstances. An object of the present invention is to provide a lighting device that provides substantially a uniform brightness distribution without having a partially formed dark portion. Another object of the present invention is to provide a display device including such a lighting device and a television receiver including such a display device.

### Means for Solving the Problem

To solve the above problem, a lighting device of the present invention includes a linearly formed light source, a chassis configured to house the light source and have an opening for light from the light source to pass through, and an optical member provided to face the light source and cover the opening, and the optical member has different light reflectance in a longitudinal direction of the light source.
The amount of emission light may be smaller at the ends of the light source. Thus, the amount of emission light may change in every portion in the longitudinal direction of the light source. In such a case, with the above configuration, the light reflectance changes of the optical member changes in every area in the longitudinal direction of the light source to control the amount of rays of light transmitting through the optical member. This achieves a uniform brightness distribution.

The light reflectance of the optical member may decrease from a middle portion to ends in the longitudinal direction of the light source.
The middle portion of the light source configures a luminous range and the ends of the light source configure non-luminous ranges. In such a case, with the above configuration, the light reflectance of the optical member is lower at the ends of the light source. Therefore, relatively a great amount of rays of light transmit through the ends of the light source and partial dark portions are less likely to be generated.

The light reflectance of the optical member may change in a direction perpendicular to the longitudinal direction of the light source.
The amount of rays of light transmitting through the optical member may change in every area of the optical member depending on a distance from the light source. In such a case, with the above configuration, the light reflectance of the optical member changes in every area to achieve a uniform brightness distribution.

The optical member may include a light source overlapping portion that overlaps the light source and an empty area overlapping portion that does not overlap the light source. At least in the light source overlapping portion, the light reflectance may decrease from a middle portion to ends in the longitudinal direction of the light source.
The difference in lightness between the light source overlapping portion of the optical member on the ends of the light source and the surrounding portions is large. This easily generates partial dark portions. With the above configuration, the rays of light emitted from the light source transmit relatively easily through the optical member and partial dark portions are less likely to be generated.

The light reflectance may be relatively higher in the light source overlapping portion than in the empty area overlapping portion.
With such a configuration, light output from the light source first reaches the light source overlapping portion of the optical member that is the portion having the relatively high light reflectance. Therefore, most of the light reflects off the light source overlapping portion (does not pass through the light source overlapping portion), and the brightness of illumination light is suppressed with respect to the light emission amount from the light source. On the other hand, the light that reflects off the light source overlapping portion is further reflected in the chassis and the light reaches the empty area overlapping portion. The light reflectance of the empty area overlapping portion is relatively low and a larger amount of light passes through the empty area overlapping portion and thus predetermined brightness of illumination light is achieved. This achieves power saving without arranging a plurality of light sources and substantially a uniform brightness distribution is achieved in the lighting device.

The light reflectance of the optical member may decrease in a continuous and gradual manner from a portion having high light reflectance to a portion having low light reflectance.
The light reflectance of the optical member may decrease in a stepwise and gradual manner from a portion having high light reflectance to a portion having low light reflectance.
The light reflectance of the optical member decreases in a continuous and gradual manner or in a stepwise and gradual manner so as to have a gradation. This makes the distribution of illumination light brightness to be moderate and the lighting device can achieve a uniform distribution of illumination light brightness.

A length of a luminous range of the light source from which light is emitted may be smaller than a length of the optical member in the longitudinal direction of the light source.
Such a configuration achieves power saving in the lighting device. However, the light emitted from the light source is less likely to reach edge portions of the optical member and this may generate partial dark portions on the edge portions easily. With the above configuration, the light reflectance of the optical member changes in every portion, and especially, the light reflectance is lower at the ends of the light source. This makes illumination light to pass through the edge portions of the optical member easily and accordingly the partial dark portions are less likely to be generated.

A light reflecting portion that reflects the light from the light source may be formed on a surface of the optical member that is close to the light source.
With this configuration ,the light reflectance of the surface of the optical member close to the light source can be changed according to a pattern of the light reflecting portion, if necessary.

The light reflecting portion may be configured by a dot pattern having light reflectivity.
Thus, the light reflecting portion is configured by a dot pattern, and therefore, the light reflection is controlled by a pattern form (the number (the density) of dots or an area of each dot). Accordingly, uniform illumination brightness can be easily obtained.

The chassis may have a surface facing the optical member and including at least a first end portion, a second end portion, and a middle portion. The second end portion may be located at an end away from the first end portion, and the middle portion may be located between the first end portion and the second end portion. At least one of the first end portion, the second end portion and the middle portion may be configured as a light source installation area in which the light source is arranged, and the rest may be configured as an empty area in which no light source is arranged.

With such a configuration, at least one of the first end portion, the second end portion and the middle portion is the light source installation area where the light source is arranged and the rest is the empty area where no light source is arranged. Thus, compared to a case in which the light sources are installed evenly in the entire chassis, the number of light sources is reduced and a cost reduction and power saving of the lighting device are achieved.

The light source installation area may be smaller than the empty area.
In such a case that the area of the light source installation area is smaller than that of the empty area, with the above configuration, the light from the light source is guided to the empty area in the chassis. This maintains uniform illumination brightness and achieves cost reduction and power saving.

The light source installation area may be provided in the middle portion of the chassis.
The light source installation area is provided in the middle portion of the lighting device and also ensures brightness in a middle portion of the display in a display device including the lighting device and the display device obtains good visibility.

The optical member may be configured by a light diffusing member that diffuses light from the light source.
With this configuration, the light transmission of the optical member is controlled in every area by changing the light reflectance distribution of the optical member, and also the light diffusing member diffuses light. This achieves uniform brightness in the surface area of the lighting device.

The light source may be a hot cathode tube.
This configuration improves brightness.

The light source may be a cold cathode tube.
This configuration extends life of the light source and light dimming is easily performed.

The light source may be a plurality of LEDs that are arranged in series.
This configuration extends life of the light source and lowers power consumption.

Next, to solve the above problem, a display device of the present invention includes the lighting device described above and a display panel configured to provide display using light from the lighting device.
According to such a display device, the lighting device ensures substantially a uniform illumination brightness distribution without having any partially formed dark portions, and therefore the display device suppresses display unevenness and achieves excellent display.

The display panel may be a liquid crystal display panel using liquid crystal. The display device as a liquid crystal display device has a variety of applications, such as a television display or a personal-computer display. Particularly, it is suitable for a large screen display.

A television receiver of the present invention includes the display device described above.
According to such a configuration, a television receiver excellent in visibility and without having display unevenness can be provided.

### Advantageous Effect of the Invention

The lighting device of the present invention provides substantially a uniform illumination brightness distribution without partially forming dark portions. The display device of the present invention including such a lighting device suppresses uneven display and achieves excellent display. The television receiver including such a display device is excellent in visibility without display unevenness.

### BRIEF DESCRIPTION OF THE DRAWINGS

FIG. 1 is an exploded perspective view illustrating a general construction of a television receiver according to a first embodiment of the present invention;
FIG. 2 is an exploded perspective view illustrating a general construction of a liquid crystal display device provided in the television receiver;
FIG. 3 is a cross-sectional view of the liquid crystal display device along the short-side direction;
FIG. 4 is a cross-sectional view of the liquid crystal display device along the long-side direction;
FIG. 5 is a plan view illustrating a general construction of a hot cathode tube provided in the liquid crystal display device;
FIG. 6 is a plan view illustrating a general construction of a chassis provided in the liquid crystal display device;
FIG. 7 is a typical view illustrating an arrangement pattern of a light reflecting portion formed on a surface of a diffuser plate provided in a backlight device that faces the hot cathode tube;
FIG. 8 is a plan view explaining a light reflectance distribution of a surface of the diffuser plate that faces the hot cathode tube;
FIG. 9 is a graph illustrating a reflectance change in an A-A' line of the diffuser plate in FIG. 8;
FIG. 10 is a graph illustrating a reflectance change in a B-B' line of the diffuser plate in FIG. 8;
FIG. 11 is a plan view explaining a light reflectance distribution of a surface of the diffuser plate facing the hot cathode tube according to one modification;
FIG. 12 is a graph illustrating a reflectance change in a C-C' line of the diffuser plate in FIG. 11;
FIG. 13 is a graph illustrating a reflectance change in a D-D' line of the diffuser plate in FIG. 11;
FIG. 14 is a typical view illustrating an arrangement pattern of a light reflecting portion formed on a surface of a diffuser plate that faces the hot cathode tube according to one modification;
FIG. 15 is a plan view of an arrangement pattern of a hot cathode tube according to one modification;
FIG. 16 is a typical view illustrating an arrangement pattern of a light reflecting portion formed on a surface of a diffuser plate that faces the hot cathode tube;
FIG. 17 is a plan view of a general construction of a chassis provided in a backlight device according to a second embodiment of the present invention;
FIG. 18 is a typical view illustrating an arrangement pattern of a light reflecting portion formed on a surface of a diffuser plate that faces cold cathode tubes;
FIG. 19 is a graph illustrating a reflectance change in an E-E' line of the diffuser plate in FIG. 16;
FIG. 20 is a graph illustrating a reflectance change in an F-F' line of the diffuser plate in FIG. 16;
FIG. 21 is an exploded perspective view illustrating a general construction of a liquid crystal display device according to a third embodiment of the present invention;
FIG. 22 is a general plan view illustrating a chassis and an arrangement pattern of LED light sources provided in the liquid display device in FIG. 21;
FIG. 23 is a typical view illustrating an arrangement pattern of a light reflecting portion formed on a surface of a diffuser plate provided in the liquid display device in FIG. 21 that faces the LED light sources;
FIG. 24 is a graph illustrating a reflectance change in a G-G' line of the diffuser plate;
FIG. 25 is a graph illustrating a reflectance change in a J-J' line of the diffuser plate;
FIG. 26 is a typical view illustrating an arrangement pattern of the LED light sources according to one modification; and
FIG. 27 is a typical view illustrating an arrangement pattern of the LED light sources according to another modification.

### BEST MODE FOR CARRYING OUT THE INVENTION

### <First embodiment>

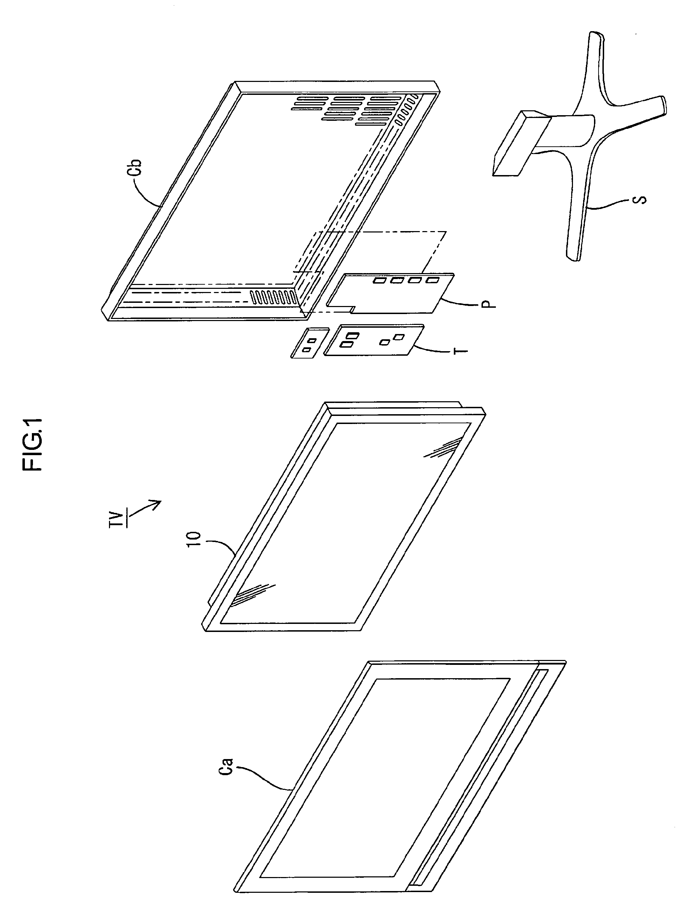

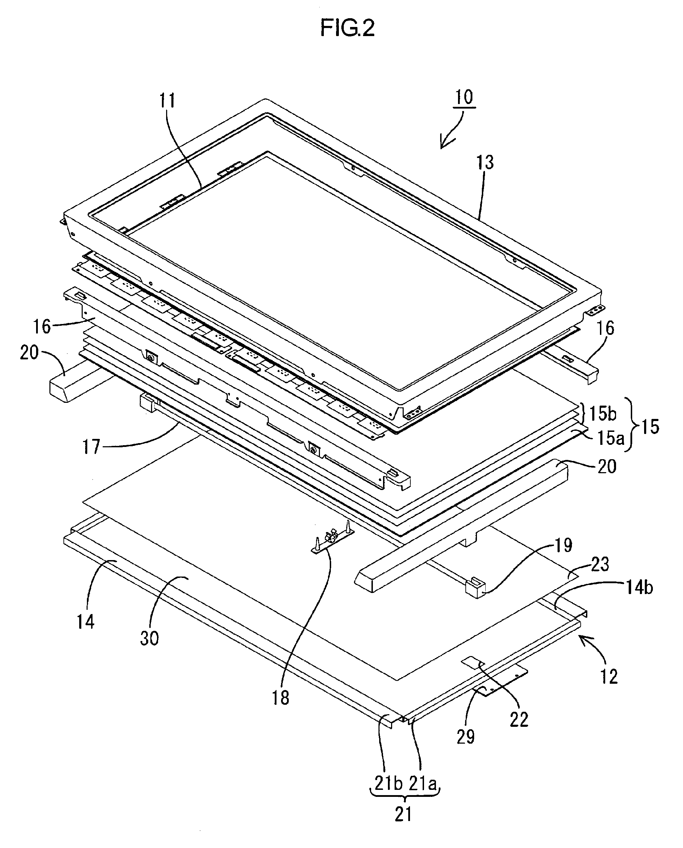

The first embodiment of the present invention will be explained with reference to FIGS. 1 to 10.
First, a construction of a television receiver TV including a liquid crystal display device 10 will be explained.
As illustrated in FIG. 1, the television receiver TV of the present embodiment includes the liquid crystal display device 10, front and rear cabinets Ca, Cb that house the liquid crystal display device 10 therebetween, a power source P, a tuner T and a stand S. An overall shape of the liquid crystal display device (display device) 10 is a landscape rectangular. The liquid crystal display device 10 is housed in a vertical position such that a short-side direction thereof matches a vertical line. As illustrated in FIG. 2, it includes a liquid crystal panel 11 as a display panel, and a backlight device 12 (lighting device), which is an external light source. They are integrally held by a frame-like bezel 13 and the like.

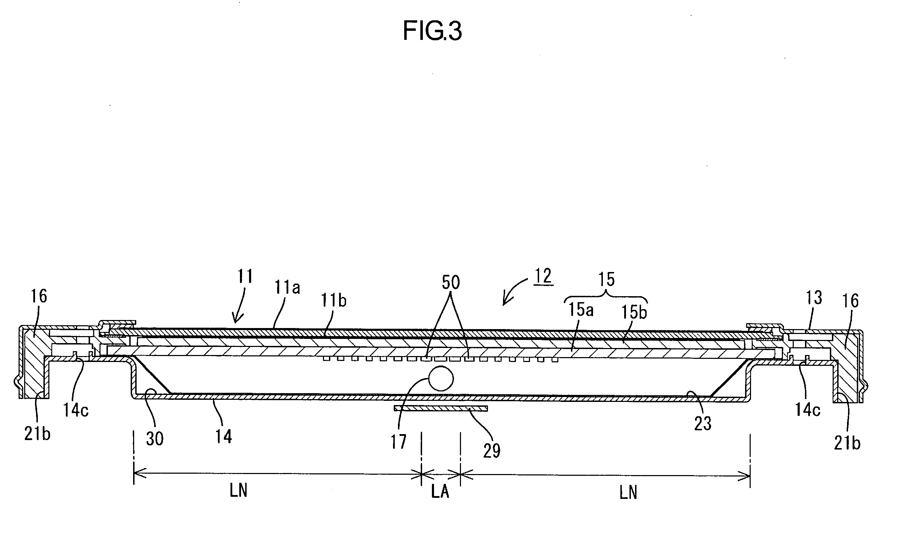

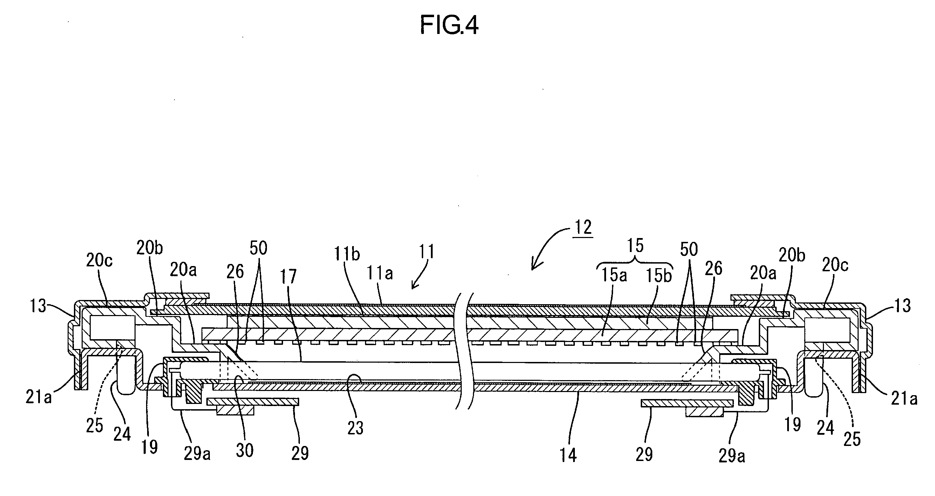

Next, the liquid crystal panel 11 and the backlight device 12 included in the liquid crystal display device 10 will be explained (see FIGS. 2 to 4).
The liquid crystal panel (display panel) 11 is constructed such that a pair of glass substrates is bonded together with a predetermined gap therebetween and liquid crystal is sealed between the glass substrates. On one of the glass substrates, switching components (e.g., TFTs) connected to source lines and gate lines that are perpendicular to each other, pixel electrodes connected to the switching components, and an alignment film are provided. On the other substrate, a color filter having color sections such as R (red), G (green) and B (blue) color sections arranged in a predetermined pattern, counter electrodes, and an alignment film are provided. Polarizing plates 11a, 11b are attached to outer surfaces of the substrates (see FIGS. 3 and 4) .

As illustrated in FIG. 2, the backlight device 12 includes a chassis 14, an optical sheet set 15 (a diffuser plate (optical member, light diffuser member) 15a and a plurality of optical sheets 15b that are disposed between the diffuser plate 15a and the liquid crystal panel 11), and frames 16. The chassis 14 has a substantially box-shape and an opening 14b on the light output side (on the liquid crystal panel 11 side). The frames 16 arranged along the long sides of the chassis 14 hold the long-side edges of the diffuser plate 15a to the chassis 14. The long-side edges of the light guide plate 15a are sandwiched between the chassis 14 and the frames 16. A hot cathode tube (light source) 17, lamp clips 18, relay connectors 19 and lamp holders 20 are installed in the chassis 14. The lamp clips 18 are provided for mounting the hot cathode tube 17 to the chassis 14. The relay connectors 19 are connected to ends of the hot cathode tube 17 for making electrical connection. The lamp holder 20 collectively covers each end of the hot cathode tube 17 and the relay connector 19. A light output side of the backlight device 12 is a side closer to the diffuser plate 15a than the hot cathode tube 17.

The chassis 14 is prepared by processing a metal plate. It is formed in a substantially shallow box shape. As illustrated in FIGS. 3 and 4, it includes a rectangular bottom plate 30 and outer rims 21, each of which extends upright from the corresponding side of the bottom plate 30 and has a substantially U shape. The outer rims 21 include short-side outer rims 21a and long-side outer rims 21b provided at the short sides and the long sides of the chassis 14, respectively. The bottom plate 30 of the chassis 14 has a plurality of mounting holes 22 along the long-side edges thereof. The relay connectors 19 are mounted in the mounting holes 22. As illustrated in FIG. 3, fixing holes 14c are provided on the upper surface of the chassis 14 along the long-side outer rims 21b to bind the bezel 13, the frames 16 and the chassis 14 together with screws and the like.

A light reflecting sheet 23 is disposed on an inner surface of the bottom plate 30 of the chassis 14 (on a side that faces the hot cathode tube 17). The light reflecting sheet 23 is a synthetic resin sheet having a surface in white color that provides high light reflectivity. The light reflecting sheet 23 is placed so as to cover almost entire inner surface of the bottom plate 30 of the chassis 14. As illustrated in FIG. 4, long-side edges of the light reflecting sheet 23 are lifted so as to cover the long-side outer rims 21b of the chassis 14 and sandwiched between the chassis 14 and the diffuser plate 15a. With this light reflecting sheet 23, light emitted from the hot cathode tubes 17 is reflected to the light guide plate 15a.

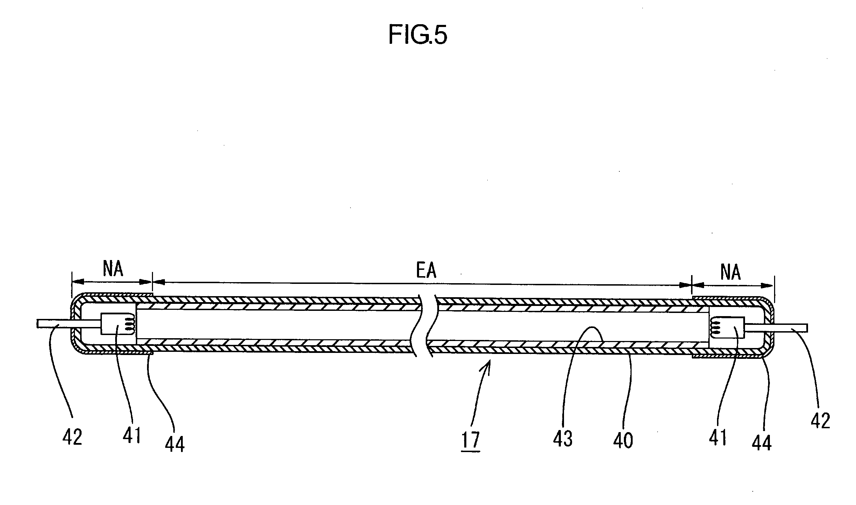

The hot cathode tube 17 is formed in an elongated tubular shape having a diameter of 15.5 mm. As illustrated in FIG. 5, the hot cathode tube 17 includes an elongated glass tube 40, electrodes 41 and outer leads 42. Two ends of the glass tube 40 are closed. The electrode 41 is enclosed inside of the glass tube 40 at each end. The outer lead 42 extends outside of the glass tube 40 from the electrode 41. Mercury is sealed inside the glass tube 40. Fluorescent material 43 is coated on an inner wall surface of the glass tube 40. Metal ferrules 44 are fitted to the two ends of the hot cathode tube 17, respectively. The two end portions of the hot cathode tube 17 in which the electrodes 41 are provided (the ferrules 44) are non-luminous ranges NA and the middle portion of the hot cathode tube 17 (the portion on which the fluorescent material 43 is coated) is the luminous range EA.

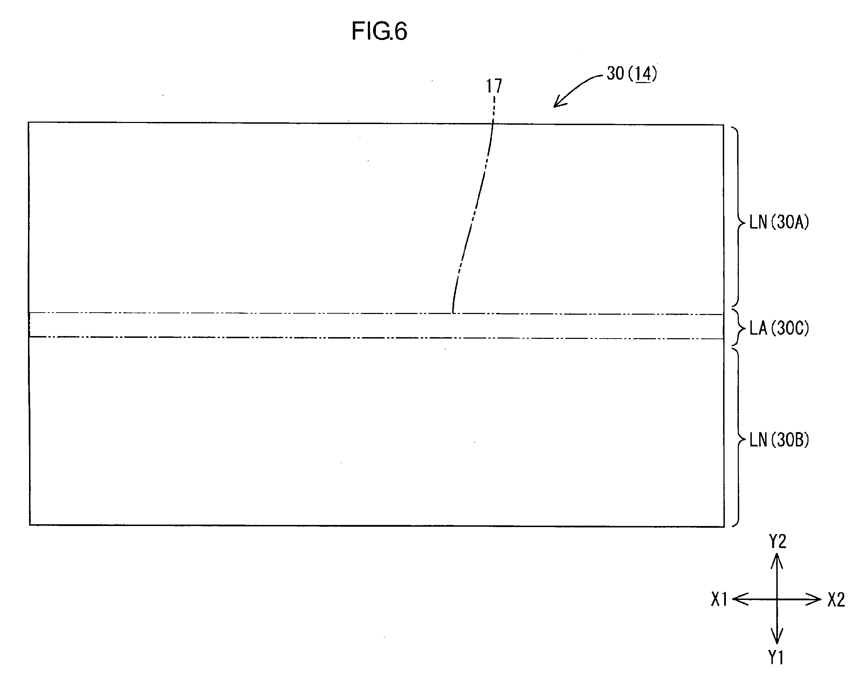

The hot cathode tube 17 is arranged in the chassis 14 such that the longitudinal direction (the axial direction) matches the long-side direction of the chassis 14. As illustrated in FIG. 6, the bottom plate 30 of the chassis 14 (the portion facing the diffuser plate 15a) is defined in three portions in the short-side direction of the chassis 14. The three portions include a first end portion 30A, a second end portion 30B that is located on an opposite side end from the first end portion 30A and a middle portion 30C that is sandwiched between the first end portion 30A and the second end portion 30B. The hot cathode tube 17 is arranged in the middle portion 30C of the bottom plate 30 and a light source installation area LA is formed there. No hot cathode tube 17 is arranged in the first end portion 30A and the second end portion 30B of the bottom plate 30 and an empty area LN is formed there. The hot cathode tube 17 is partially arranged in the middle portion of the bottom plate 30 of the chassis 14 to form the light source installation area LA. An area of the light source installation area LA is smaller than that of the empty area LN. A ratio of the area of the light source installation area LA occupying in the entire area of the bottom plate 30 of the chassis 14 is preferably set to be in a range from 4% to 37% for achieving power saving and ensuring brightness and is set to be 4% in this embodiment. The ratio may be changed according to the number of the hot cathode tubes 17.

On the outer surface of the bottom plate 30 of the chassis 14 (on a side opposite from the hot cathode tube 17), as illustrated in FIGS. 3 and 4, the inverter board set 29 is provided so as to overlap the light source installation area LA, more specifically to overlap each end of the hot cathode tube 17. Drive power is supplied from the inverter board set 29 to the hot cathode tube 17. Each end of the hot cathode tube 17 has a terminal (not shown) for receiving drive power and electrical connection between the terminal and a harness 29a (see FIG. 4) derived from the inverter board set 29 enables supply of high-voltage drive power. Such electrical connection is established in a relay connector 19 in which the end of the hot cathode tube 17 is fitted. The holders 20 are mounted so as to cover the relay connectors 19.

The holders 20 that cover the ends of the hot cathode tube 17 and the relay connectors 19 are made of white synthetic resin. Each of them has an elongated substantially box shape that extends along the short side of the chassis 14 as illustrated in FIG. 2. As illustrated in FIG. 4, each holder 20 has steps on the front side such that the diffuser plate 15a and the liquid crystal panel 11 are held at different levels. A part of the holder 20 is placed on top of a part of the corresponding short-side outer rim 21a of the chassis 14 and forms a side wall of the backlight device 12 together with the outer rim 21a. An insertion pin 24 projects from a surface of the holder 20 that faces the outer rim 21a of the chassis 14. The holder 20 is mounted to the chassis 14 by inserting the insertion pin 24 into the insertion hole 25 provided in the top surface of the outer rim 21a of the chassis 14.

The steps of the holder 20 that covers the end of the hot cathode tube 17 include three surfaces that are parallel to the bottom plate 30 of the chassis 14. The three surfaces include a first surface 20a, a second surface 20b and a third surface 20c. The short-side rim of the diffuser plate 15a is placed on the first surface 20a that is located at a lowest level. A slanted cover 26 extends from the first surface 20a toward the bottom plate 30 of the chassis 14 with being slanted. A short-side rim of the liquid crystal panel 11 is placed on the second surface 20b of the holder 20. The third surface 20c that is located at a highest level overlaps the outer rim 21a of the chassis 14 and comes in contact with the bezel 13.

On the opening 14b side of the chassis 14, the optical sheet set 15 including the diffuser plate (optical member, light diffusing member) 15a and the optical sheets 15b is provided. The diffuser plate 15a is configured by a plate-like member of synthetic resin and light scattering particles dispersed therein. The diffuser plate 15a diffuses linear light emitted from the hot cathode tube 17 that is a linear light source and also reflects light emitted from the hot cathode tube 17. Each of the short-side rims of the diffuser plate 15a is placed on the first surface 20a of the holder and does not receive a vertical force. Thus, the diffuser plate 15a covers the opening 14b of the chassis 14.

The optical sheets 15b provided on the diffuser plate 15a includes a diffuser sheet, a lens sheet and a reflection-type polarizing plate layered in this order from the diffuser plate 15a side. The optical sheets 15b convert the light that is emitted from the hot cathode tube 17 and passes through the diffuser plate 15a to planar light. The liquid crystal display panel 11 is disposed on the top surface of the top layer of the optical sheets 15b. The optical sheets 15b are held between the diffuser plate 15a and the liquid crystal panel 11.

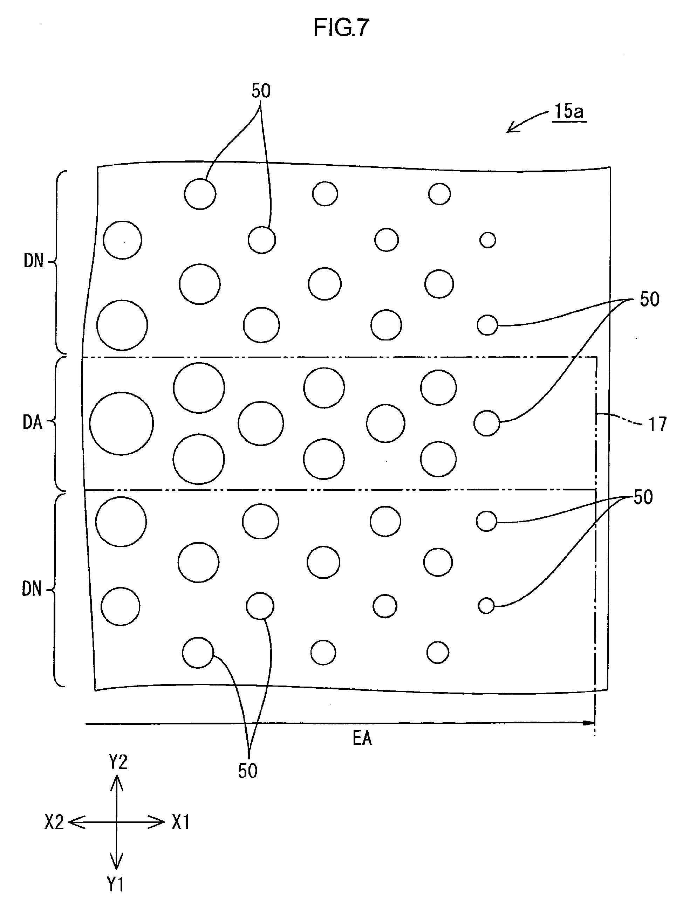

A light reflecting function of the diffuser plate 15a will be explained in detail with reference to FIGS. 7 to 10.

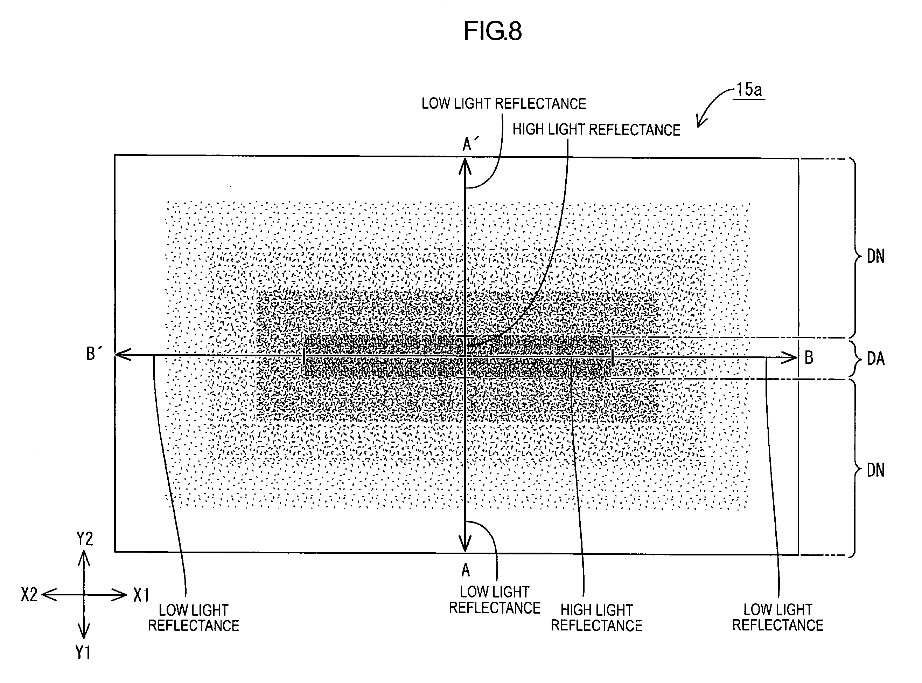

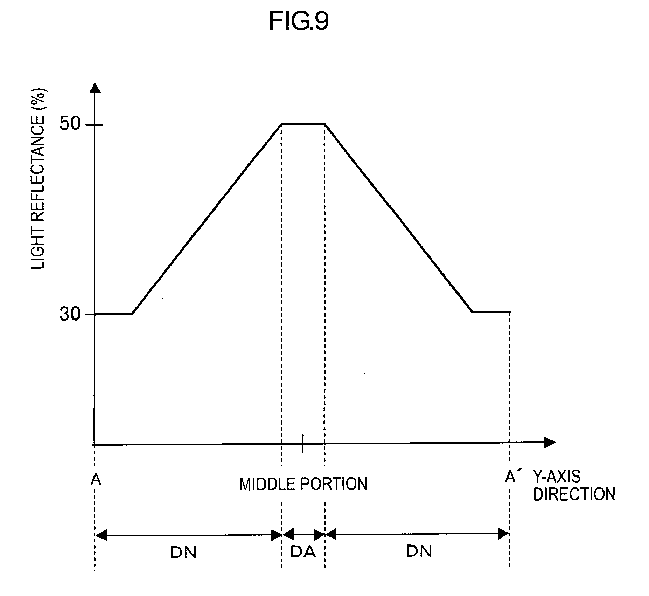

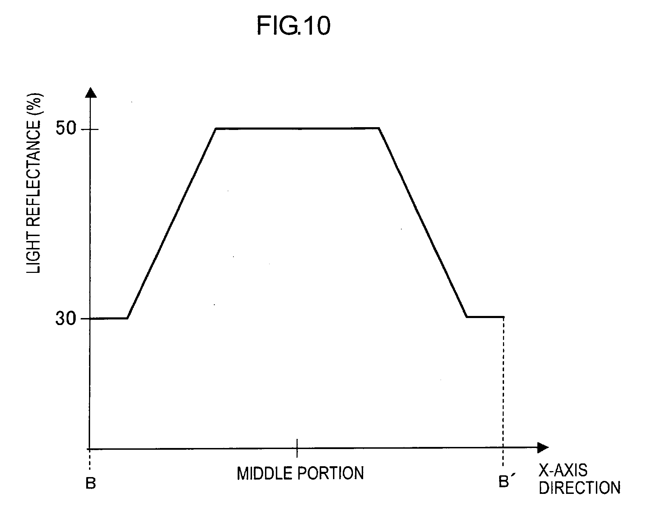

FIG. 7 is a typical view illustrating an arrangement pattern of a light reflecting portion formed on a surface of a diffuser plate. FIG. 8 is a plan view explaining a light reflectance distribution of a surface of the diffuser plate facing the hot cathode tube. FIG. 9 is a graph illustrating a reflectance change in an A-A' line of the diffuser plate in FIG. 8. FIG. 10 is a graph illustrating a reflectance change in a B-B' line of the diffuser plate in FIG. 8. In FIGS. 7 to 10, the long-side direction of the diffuser plate is referred to as an X-axis direction and the short-side direction thereof is referred to as a Y-axis direction. In FIG. 9, a horizontal axis shows the Y-axis direction (short-side direction) and the light reflectance is plotted on a graph from an end portion close to the Y1 (indicated by A) to a middle portion in the Y-axis direction and from the middle portion to an end portion closer to the Y2 (indicated by A') in the Y-axis direction. In FIG. 10, a horizontal axis shows the X-axis direction (long-side direction) and the light reflectance is plotted on a graph from an end portion close to close to the X1 (indicated by B) to a middle portion in the X-axis direction and from the middle portion to an end portion close to the X2 (indicated by B') in the X-axis direction.

As illustrated in FIG. 7, a light reflecting portion 50 configured by a white dot pattern is formed on the diffuser plate 15a on a surface opposite from the hot cathode tube 17. In the present embodiment, each dot of the light reflecting portion 5.0 is formed in a circular shape. The dot pattern forming the light reflecting portion 50 is formed by printing paste containing metal oxide (such as titanium oxide), for example, on the surface of the diffuser plate 15a. Preferable printing means is screen printing, inkjet printing and the like. In the present embodiment, a length of a luminous range EA of the hot cathode tube 17 is substantially equal to a length of the long side of the diffuser plate 15a (in the X-axis direction).

The light reflecting portion 50 facing the hot cathode tube 17 has a light reflectance of 80% in its surface area and the diffuser plate 15a facing the hot cathode tube 17 has a light reflectance of 30% in its surface area. Thus, the light reflecting portion 50 has a relatively high light reflectance. In the present embodiment, the light reflectance of each material is represented by an average light reflectance measured with a LAV of CM-3700d (measurement area diameter of 25.4 mm) manufactured by Konica Minolta inside the measurement circle. The light reflectance of the light reflecting portion 50 is measured in the following method. The light reflecting portion 50 is formed over an entire surface of a glass substrate and the light reflectance of the surface is measured according to the above measurement means. The light reflectance of the light reflecting portion 50 is preferably 80% or more, and more preferably 90% or more. Thus, as the light reflectance of the light reflecting portion 50 is higher, the light reflection is controlled more precisely and accurately according to a pattern form of the dot pattern such as the number of dots or the area of each dot.

As illustrated in FIGS. 8 to 10, the light reflectance of the surface of the diffuser plate 15a facing the hot cathode tube 17 changes in every area in the long-side direction (a direction along the longitudinal direction of the hot cathode tube 17, the X-axis direction) and in the short-side direction (a direction perpendicular to the longitudinal direction of the hot cathode tube 17, the Y-axis direction) according to the dot pattern of the light reflecting portion 50. In the short-side direction of the diffuser plate 15a, the light reflectance of the portion of the diffuser plate 15a overlapping the hot cathode tube 17 (hereinafter, referred to as a light source overlapping portion DA) is higher than the light reflectance of the portions of the diffuser plate 15a overlapping portions in which no hot cathode tube 17 is arranged (hereinafter, referred to as an empty area overlapping portion DN). Specifically, the light reflectance is 50% that represents a highest value in the middle portion of the light source overlapping portion DA in the longitudinal direction of the hot cathode tube 17. On the other hand, in the empty area overlapping portion DN of the diffuser plate 15a, the light reflectance decreases in a continuous manner from the portion closer to the light source overlapping portion DA toward the portion away from the light source overlapping portion DA. The light reflectance is set to a lowest value that is 30% at two end portions of the empty area overlapping portion DN in the short-side direction (indicated by A and A' in FIGS. 8 and 9) . In the portions of the diffuser plate 15a other than the middle portion in the longitudinal direction of the hot cathode tube 17, the light reflectance decreases from the middle portion toward the two end portions in the short-side direction of the diffuser plate 15a.

In the long-side direction of the diffuser plate 15a, the light reflectance decreases from the middle portion to the two end portions of the hot cathode tube 17. The light reflectance is 50% that represents a highest value in the middle portion of the hot cathode tube 17 in the light source overlapping portion DA of the diffuser plate 15a. The light reflectance decreases in a continuous manner from the portion closer to the middle portion to the portion farther away therefrom. The light reflectance is 30% that represents a lowest value in the two end portions in the long-side direction of the diffuser plate 15a (indicated by B and B' in FIGS. 8 and 10). In the empty area overlapping portion DN of the diffuser plate 15a, the light reflectance decreases from the middle portion to the end portions in the longitudinal direction of the hot cathode tube 17.

A light reflectance distribution on the diffuser plate 15a is determined by an area of each dot of the light reflecting portion 50. The light reflectance of the light reflecting portion 50 is higher than that of the diffuser plate 15a. Therefore, the light reflectance relatively increases as the area of each dot of the light reflecting portion 50 relatively increases, and the light reflectance relatively decreases as the area of each dot of the light reflecting portion 50 relatively decreases. Specifically, the area of each dot of the light reflecting portion 50 is relatively great in the middle portion of the diffuser plate 15a in the longitudinal direction of the hot cathode tube 17 and in the middle portion of the diffuser plate 15a in the direction perpendicular to the longitudinal direction. The area of each dot of the light reflecting portion 50 decreases in a continuous manner toward the respective end portions. As control means for controlling the light reflectance, the area of each dot of the light reflecting portion 50 may be uniform and distances of the dots may be varied.

As is explained before, according to the present embodiment, the light reflectance of the diffuser plate 15a changes in every area in the longitudinal direction of the hot cathode tube 17.
The amount of emission light is smaller at the ends of the hot cathode tube 17. Thus, the amount of emission light may change in every portion in the longitudinal direction of the hot cathode tube 17. In such a case, with the configuration of the present embodiment, the light reflectance changes of the diffuser plate 15a changes in every area in the longitudinal direction of the hot cathode tube 17 to control the amount of rays of light transmitting through the diffuser plate 15a. This achieves a uniform brightness distribution.

The diffuser plate 15a is configured such that the light reflectance changes in every area along a direction perpendicular to the longitudinal direction of the hot cathode tube 17.
The amount of rays of light transmitting through the diffuser plate 15a may change in every area of the diffuser plate 15a depending on a distance from the hot cathode tube 17. In such a case, with the configuration of the present embodiment, the light reflectance of the diffuser plate 15a changes in every area to achieve a uniform brightness distribution.

The light reflectance of the diffuser plate 15a decreases from the middle portion to the end portions in the longitudinal direction of the hot cathode tube 17.
The middle portion of the hot cathode tube 17 configures the luminous range EA and the ends of the hot cathode tube 17 configure non-luminous ranges NA. In such a case, with the configuration of the present embodiment, the light reflectance of the diffuser plate 15a is lower at the ends of the hot cathode tube 17. Therefore, relatively a great amount of rays of light transmit through the ends of the hot cathode tube 17 and partial dark portions are less likely to be generated.

The diffuser plate 15a includes the light source overlapping portion DA that overlaps the hot cathode tube 17 and the empty area overlapping portion DN that does not overlap the hot cathode tube 17. In at least the light source overlapping portion DA, the light reflectance decreases from the middle portion to the end portions in the longitudinal direction of the hot cathode tube 17.
The difference in lightness between the light source overlapping portion DA of the diffuser plate 15a on the end sides of the hot cathode tube 17 and the surrounding portions is large. This easily generates partial dark portions. With the above configuration, the rays of light emitted from the hot cathode tube 17 transmit relatively easily through the diffuser plate 15a and partial dark portions are less likely to be generated.

On the diffuser plate 15a, the light reflectance is relatively higher in the light source overlapping portion DA than the empty area overlapping portion DN.
With such a configuration, light output from the hot cathode tube 17 first reaches the light source overlapping portion DA of the diffuser plate 15a that is the portion having the relatively high light reflectance. Therefore, most of the light reflects off the light source overlapping portion DA (does not pass through the light source overlapping portion DA), and the brightness of illumination light is suppressed with respect to the light emission amount from the hot cathode tubes 17. On the other hand, the light that reflects off the light source overlapping portion DA is further reflected in the chassis 14 and the light reaches the empty area overlapping portion DN. The light reflectance of the empty area overlapping portion DN is relatively low and a larger amount of light passes through the empty area overlapping portion DN and thus predetermined brightness of illumination light is achieved. This achieves power saving without arranging a plurality of hot cathode tubes 17 and substantially a uniform brightness distribution is achieved in the backlight device 12.

The diffuser plate 15a is configured such that the light reflectance decreases in a continuous and gradual manner from the portion having higher light reflectance to the portion having lower light reflectance.
The light reflectance of the diffuser plate 15a decreases in a continuous and gradual manner so as to have a gradation. This makes the distribution of illumination light brightness to be moderate and the backlight device 12 can achieve a uniform distribution of illumination light brightness.

The light reflecting portion 50 that reflects light from the hot cathode tube 17 is formed on the surface of the diffuser plate 15a facing the hot cathode tube 17. Therefore, the light reflectance of the surface of the diffuser plate 15a close to the hot cathode tube 17 can be changed according to the pattern of the light reflecting portion 50, if necessary.

The light reflecting portion 50 is configured by a dot pattern having light reflectivity. The light reflection is controlled by a pattern form (the number (the density) of dots or an area of each dot). Accordingly, uniform illumination brightness can be easily obtained.

According to the present embodiment, the chassis 14 is configured such that the bottom plate 30 facing the diffuser plate 15a is defined in the first end portion 30A, the second end portion 30B and the middle portion 30C that is sandwiched between the first and second end portions 30A and 30B. The second end portion 30B is on the opposite end side from the first end portion 30A. One of the first end portion 30A, the second end portion 30B and the middle portion 30C corresponds to the light source installation area LA where the hot cathode tube 17 is arranged and the rest corresponds to the empty areas LN where no hot cathode tube 17 is arranged. Thus, compared to a case in which the hot cathode tubes 17 are installed evenly in the entire chassis 14, the number of hot cathode tubes 17 is reduced and a cost reduction and power saving of the backlight device 12 are achieved.

In the chassis 14, an area of the light source installation area LA is smaller than that of the empty area LN.
In such a case that the area of the light source installation area LA is smaller than that of the empty area LN, with a configuration of the present embodiment, the light from the hot cathode tube 17 is reflected by the light reflecting portion 50, for example, to be guided to the empty area LN in the chassis 14. This maintains uniform illumination brightness and achieves cost reduction and power saving.

The light source installation area LA is provided in the middle portion 30C of the chassis 14.
This ensures sufficient brightness in a middle portion of the backlight device 12 and also ensures brightness in a middle portion of the display in the liquid crystal display device 10 including the backlight device 12 and the liquid crystal display device 10 obtains good visibility.

In the present embodiment, the diffuser plate 15a is configured by a light diffusing member that diffuses light from the hot cathode tube 17.
With this configuration, the light transmission of the light source overlapping portion DA and the empty area overlapping portion DN of the diffuser plate 15a is controlled by changing the light reflectance distribution of the light reflecting portion 50, and also the light diffusing member diffuses light. This achieves uniform brightness in the surface area of the backlight device 12.

The hot cathode tube 17 is used as the light source in the present embodiment. This achieves high brightness.

### [First Modification of First Embodiment]

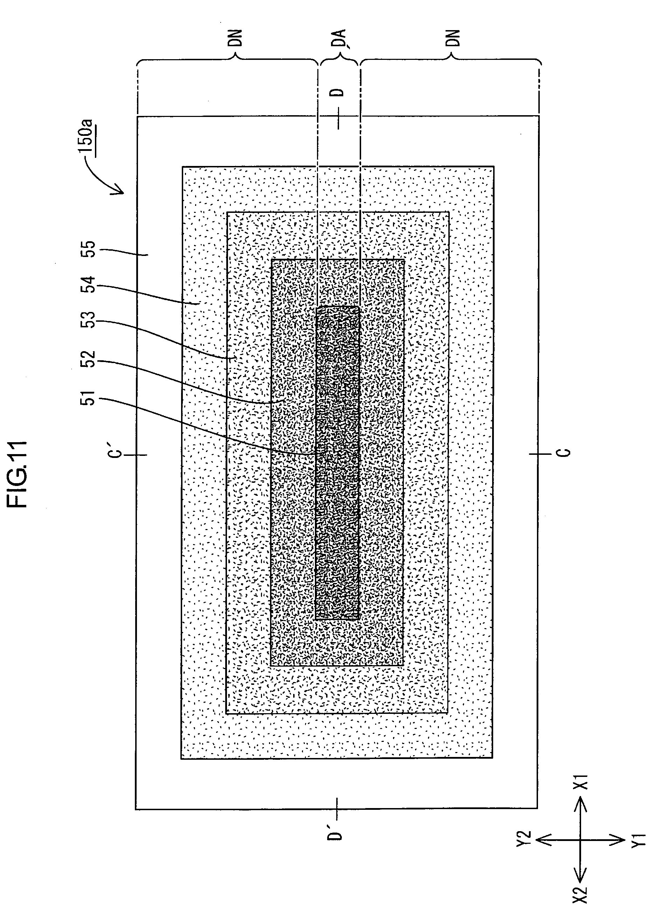

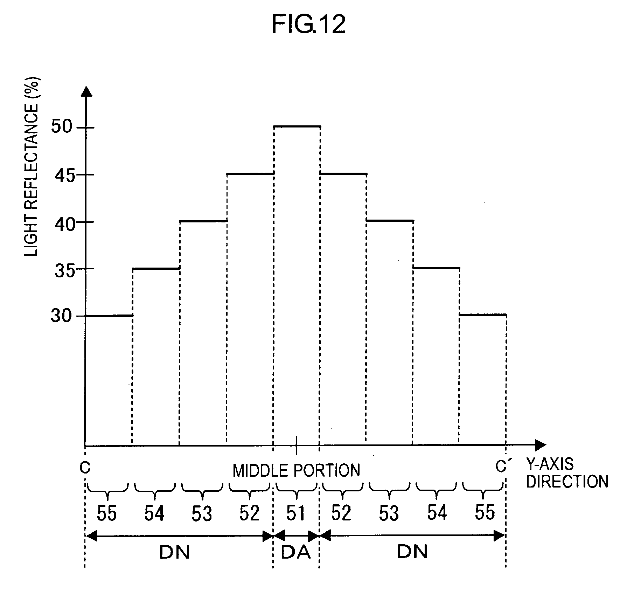

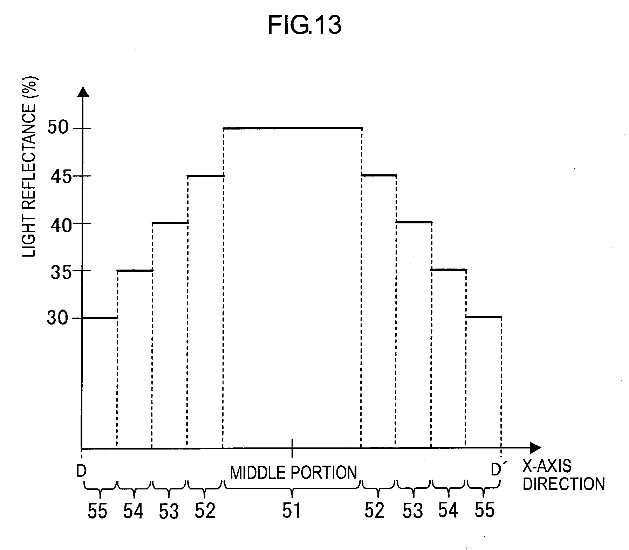

The present invention is not limited to the first embodiment, and may include a following modification. The light reflectance distribution of the diffuser plate 15a may be modified as illustrated in FIGS. 11 and 12. FIG. 11 is a plan view explaining a light reflectance distribution of a surface of the diffuser plate facing the hot cathode tube according to one modification. FIG. 12 is a graph illustrating a reflectance change in a C-C' line of the diffuser plate in FIG. 10. FIG. 13 is a graph illustrating a reflectance change in a D-D' line of the diffuser plate in FIG. 10. In the following modification, the same components and parts as the first embodiment are indicated by the same symbols and will not be explained.

A diffuser plate 150a is configured as illustrated in FIGS. 11 to 13. The light source overlapping portion DA (the portion that overlaps the hot cathode tube 17) has the highest light reflectance. In the empty area overlapping portion DN (the portion that does not overlap the hot cathode tube 17), the light reflectance decreases in a stepwise and gradual manner from the portion closer to the light source overlapping portion DA toward the portion farther therefrom. More specifically, as illustrated in FIG. 11, a first area 51 having relatively high light reflectance is provided in the light source overlapping portion DA that is located in the middle portion of the diffuser plate 150a, and a second area 52 having light reflectance relatively lower than the first area 51 is provided to surround the first area 51. Further, a third area 53 having light reflectance relatively lower than the second area 52 is provided to surround the second area 52, and a fourth area 54 having light reflectance lower than the third area 53 is provided to surround the third area 53. Further, a fifth area 55 having light reflectance lower than the fourth area 54 is provided in an outer peripheral edge portions of the diffuser plate 150a so as to surround the fourth area 54.

In this modification, as illustrated in FIG. 12, the light reflectance of the diffuser plate 150a is 50% in the first area 51, 45% in the second area 52, 40% in the third area 53, 35% in the fourth area 54, and 30% in the fifth area 55. The light reflectance of the diffuser plate 150a changes at an equal ratio in the short-side direction (a direction perpendicular to the longitudinal direction of the hot cathode tube 17, the Y-axis direction).

The light reflectance of the diffuser plate 150a changes in the long-side direction (a direction along the longitudinal direction of the hot cathode tube 17, the X-axis direction) as follows. The light reflectance of the diffuser plate 150a is 50% in the first area 51, 45% in the second area 52, 40% in the third area 53, 35% in the fourth area 54, and 30% in the fifth area 55, as illustrated in FIG. 13. In the first area 51 to the fourth area 54, the light reflectance is determined by changing an area of each dot of the light reflecting portion 50. The light reflectance portion 50 is not formed in the fifth area 55 and the fifth area 55 has light reflectance of the diffuser plate 150a itself.

A plurality of areas 52, 53, 54, 55 having different light reflectance are defined on the diffuser plate 150a. The light reflectance is reduced from the second area 52 to the fifth area 55 sequentially in this order such that the light reflectance decreases in a stepwise and gradual manner from the portion closer to the light source overlapping portion DA toward the portion farther therefrom.
With such a configuration, the brightness distribution of illumination light in the empty area overlapping portion DN (the empty area LN) is made moderate and this eventually achieves a moderate illumination brightness distribution in the backlight device 12. Provided with the means for forming a plurality of areas 52, 53, 54, 55 having different light reflectance, a manufacturing method of the diffuser plate 150a becomes simple and this contributes to a cost reduction.

### [Second Modification of First Embodiment]

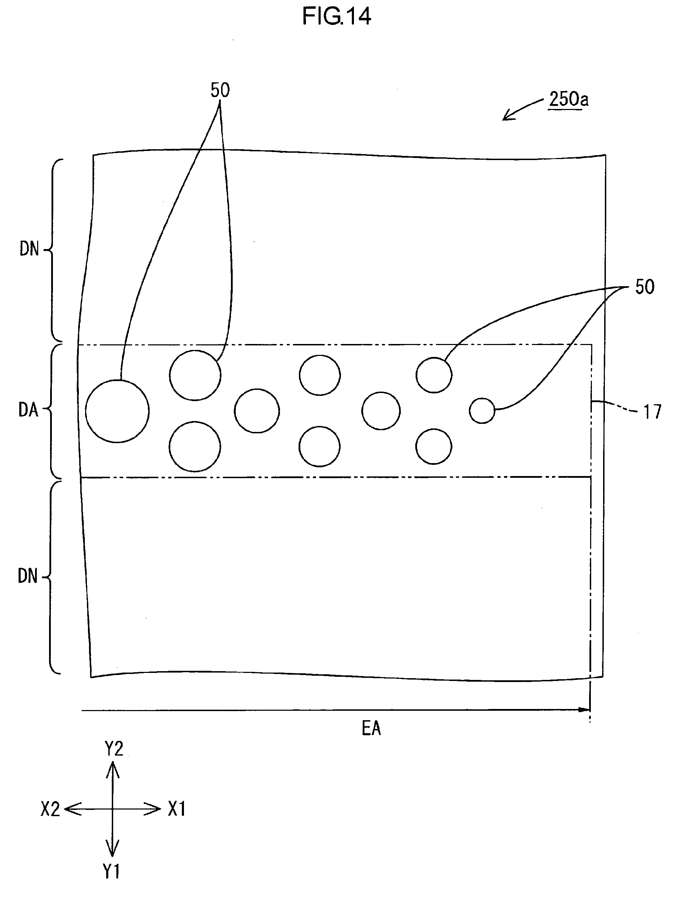

Another modification of an arrangement pattern of the light reflecting portion 50 will be explained with reference to FIG. 14. FIG. 14 is a typical view illustrating an arrangement pattern of a light reflecting portion formed on a surface of a diffuser plate that faces the hot cathode tube according to another modification. In the following modification, the same components and parts as the first embodiment are indicated by the same symbols and will not be explained.

The light reflecting portion 50 is formed only in the light source overlapping portion DA (the portion that overlaps the hot cathode tube 17) of a diffuser plate 250a in this modification. No light reflecting portion 50 is formed in the empty area overlapping portion DN (the portion that does not overlap the hot cathode tube 17) of the diffuser plate 250a. An area of each dot of the light reflecting portion 50 decreases in a continuous manner from the middle portion to the ends in the longitudinal direction of the hot cathode tube 17. Accordingly, the light reflectance in the light source overlapping portion DA of the diffuser plate 250a decreases in a continuous and gradual manner from the middle portion to the ends in the longitudinal direction of the hot cathode tube 17.

With such a configuration, light output from the hot cathode tube 17 first reaches the light source overlapping portion DA of the diffuser plate 250a that is the portion having the relatively high light reflectance. Therefore, most of the light reflects off the light source overlapping portion DA (does not pass through the light source overlapping portion DA), and the brightness of illumination light is suppressed with respect to the light emission amount from the hot cathode tube 17. On the other hand, the light that reflects off the light source overlapping portion DA is further reflected in the chassis 14 and the light reaches the empty area overlapping portion DN. The light reflectance of the empty area overlapping portion DN is relatively low and a larger amount of light passes through the empty area overlapping portion DN and thus predetermined brightness of illumination light is achieved. This achieves power saving without arranging a plurality of hot cathode tubes 17 and substantially a uniform brightness distribution is achieved in the backlight device 12. Further, the light reflectance in the light source overlapping portion DA of the diffuser plate 250a decreases in a continuous and gradual manner from the middle portion to the ends in the longitudinal direction of the hot cathode tube 17. Accordingly, the light easily transmits through the portion of the light source overlapping portion DA on the end sides of the hot cathode tube 17 and dark portions are less likely to be partially generated.

### [Third Modification of First Embodiment]

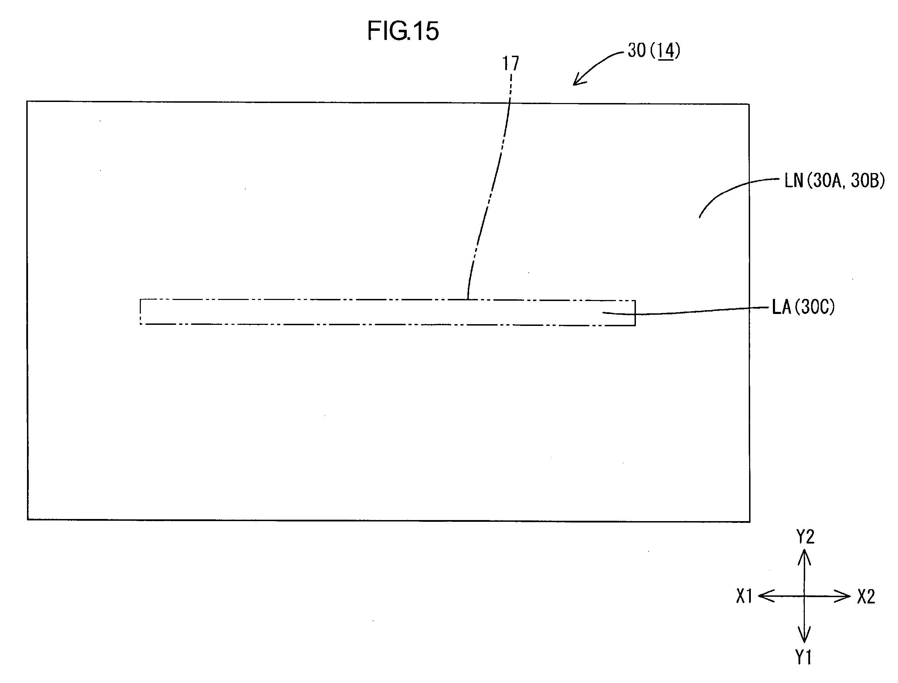

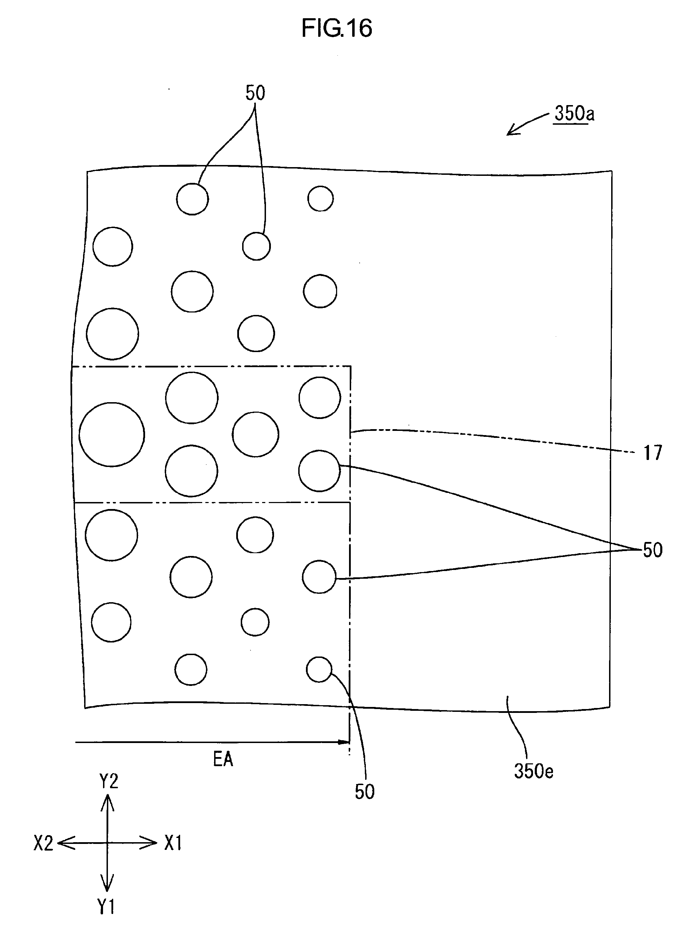

Another additional modification of the arrangement pattern of the hot cathode tube 17 will be explained with reference to FIGS. 15 and 16. FIG. 15 is a plan view of an arrangement pattern of a hot cathode tube according to another additional modification. FIG. 16 is a typical view illustrating an arrangement pattern of a light reflecting portion formed on a diffuser plate. In the following modification, the same components and parts as the first embodiment are indicated by the same symbols and will not be explained.

As illustrated in FIG. 15, the hot cathode tube 17 is housed in the chassis 14 such that its longitudinal direction (the axial direction) matches the long-side direction of the chassis 14. A longitudinal length of the hot cathode tube 17 is smaller than a length of the bottom plate 30 of the chassis 14 in the long-side direction. Therefore, the light source installation area LA is surrounded by the empty area LA. In such a case, as illustrated in FIG. 14, the length of the luminous range EA of the hot cathode tube 17 is smaller than the length of the diffuser plate 350a in the longitudinal direction of the hot cathode tube 17 (the length of the long-side direction). Edge portions 350e (short-side edge portions, edge portions in the X-axis direction) that are located on the diffuser plate 350a on end sides in the longitudinal direction of the hot cathode tube 17 do not overlap the luminous range EA of the hot cathode tube 17. No light reflecting portion 50 is formed in the edge portions 350e and the light reflectance is relatively small in the edge portions 350e.

As explained before, the length of the hot cathode tube 17 (the length of the luminous range EA) is relatively reduced to achieve power saving of the backlight device 12. In such a case, the light emitted from the hot cathode tube 17 is less likely to reach the edge portions 350e of the diffuser plate 350a and this may generate partial dark portions on the edge portions 350e easily. No light reflecting portion 50 is formed in the edge portions 350e of the diffuser plate 350a in this modification. This makes the illumination light to pass through the edge portions 350e of the diffuser plate 350a easily and accordingly the partial dark portions are less likely to be generated.

### <Second Embodiment>

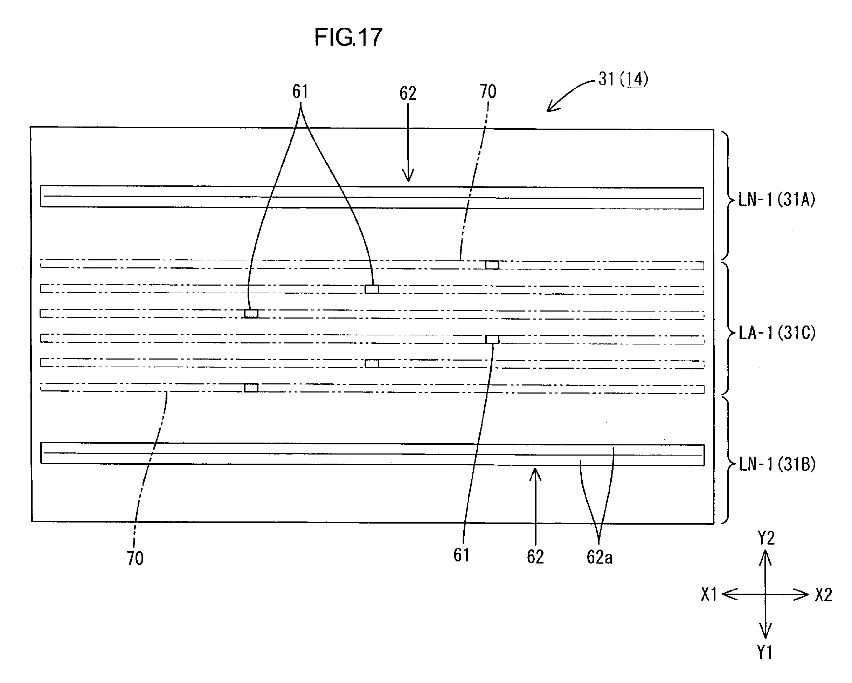

A second embodiment of the present invention will be explained with reference to FIGS. 17 to 20. In the second embodiment, the arrangement pattern of the light source is altered from the first embodiment and other configuration is similar to the first embedment. In the second embodiment, the same components and parts as the first embodiment are indicated by the same symbols and will not be explained.

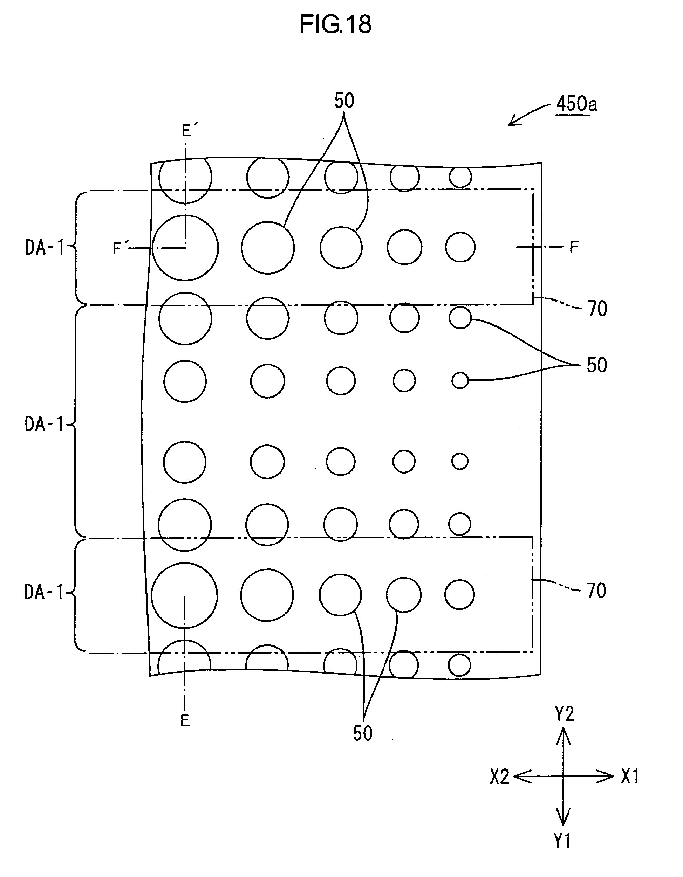

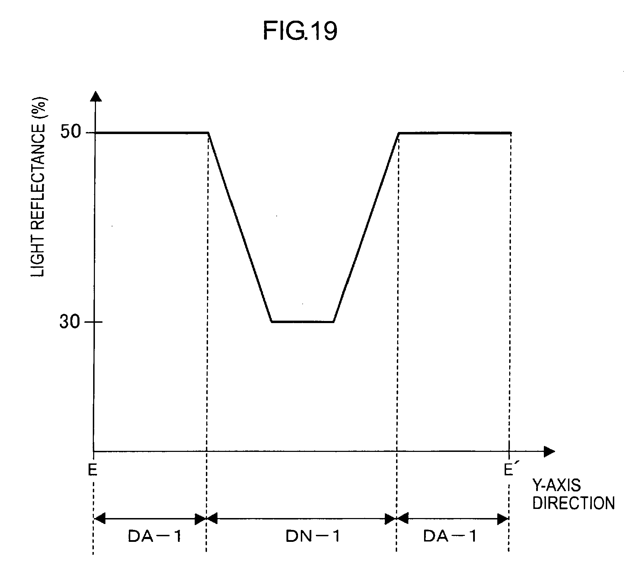

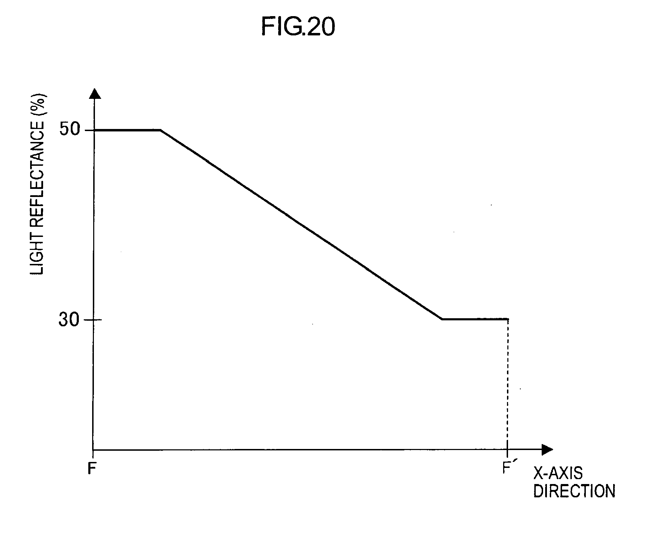

FIG. 17 is a plan view of a general construction of a chassis provided in a backlight device. FIG. 18 is a typical view illustrating an arrangement pattern of a light reflecting portion formed on a surface of a diffuser plate that faces cold cathode tubes. FIG. 19 is a graph illustrating a reflectance change in an E-E' line of the diffuser plate in FIG. 18. FIG. 20 is a graph illustrating a reflectance change in an F-F' line of the diffuser plate in FIG. 18. In FIG. 19, a horizontal axis shows the Y-axis direction (short-side direction) and the light reflectance is plotted on a graph from one point (indicated by E) to another point (indicated by E') in the Y-axis direction. In FIG. 20, a horizontal axis shows the X-axis direction (long-side direction) and the light reflectance is plotted on a graph from one point (indicated by F) to another point (indicated by F') in the X-axis direction.

Each cold cathode tube 70 has an elongated tubular shape having a diameter of 4.0 mm. A plurality of the cold cathode tubes 70 are installed in the chassis 14 such that they are arranged parallel to each other with the long-side direction (axial direction) thereof aligned along the long-side direction of the chassis 14. The cold cathode tubes 17 are arranged in a portion in the chassis 14. More specifically, as illustrated in FIG. 17, a bottom plate 31 of the chassis 14 (a portion facing a diffuser plate 450a) is defined in the short-side direction equally in a first end portion 31A, a second end portion 31B that is located at an end opposite from the first end portion 31A and a middle portion 31C that is sandwiched between the first end portion 31A and the second end portion 31B. The cold cathode tubes 70 are arranged in the middle portion 31C of the bottom plate 31 and a light source installation area LA-1 is formed in the middle portion 31C. On the other hand, no cold cathode tube 70 is arranged in the first end portion 31A and the second end portion 31B of the bottom plate 31 and an empty area LN-1 is formed in the first end portion 31A and the second end portion 31B. A ratio of an area of the light source installation area LA-1 occupying in an entire area of the bottom plate 31 of the chassis 14 can be changed. The ratio is preferably set in a range from 20% to 60% to achieve power saving and ensure brightness, and it is 42 % in this embodiment.

In the light source installation area LA-1 of the bottom plate 31 of the chassis 14, the cold cathode tubes 70 are held by the lamp clips (not shown) to be supported with a small gap between the cold cathode tubes 70 and the bottom plate 31 of the chassis 14. Heat transfer members 61 are disposed in the gap such that a part of the cold cathode tube 70 is in contact with the bottom plate 31. Heat is transferred from the cold cathode tubes 70 that are lit and have high temperature to the chassis 14 via the heat transfer members 61. Therefore, the temperature of the cold cathode tubes 17 is lowered at the portions in which the heat transfer members 61 are arranged and the coldest points are forcibly generated there. As a result, the brightness of each one of the cold cathode tubes 70 is improved and this contributes to power saving.

In each of the empty areas LN-1 of the bottom plate 31 of the chassis 14, that is, in each of the first end portion 31A and the second end portion 31B of the bottom plate 31, a convex reflecting portion 62 extends along the long-side direction of the bottom plate 31. The convex reflecting portion 62 is made of a synthetic resin and has a surface in white color that provides high light reflectivity. Each convex reflecting portion 62 has two sloped surfaces 62a, 62a that are sloped toward the bottom plate 31 and one of which faces the cold cathode tube 70. The convex reflecting portion 62 is provided such that its longitudinal direction matches an axial direction of the cold cathode tubes 70 arranged in the light source installation area LA-1. One sloped surface 62a directs light emitted from the cold cathode tubes 70 to the diffuser plate 450a. The sloped surface 62a of the convex reflecting portion 62 reflects the light emitted from the cold cathode tubes 70 to the diffuser plate 450a side, and therefore the emitted light is effectively used.

As illustrated in FIG. 18, the light reflecting portion 50 that has a white dot pattern is formed on a surface of the diffuser plate 450a that faces the cold cathode tubes 70. The dot pattern is formed by printing paste containing metal oxide (such as titanium oxide) on the surface of the diffuser plate 450a. The light reflecting portion 50 is formed such that an area of each dot changes in every area of the diffuser plate 450a. An area of each dot changes in the short-side direction of the diffuser plate 450a (a direction perpendicular to the longitudinal direction of the cold cathode tube 70, the Y-axis direction) as follows. An area of each dot of the light reflecting portion 50 is largest in portions of the diffuser plate 450a that overlap the cold cathode tubes 70 (light source overlapping portions DA-1). An area of each dot of the light reflecting portion 50 decreases in a continuous manner in a direction away from the light source overlapping portion DA-1 (in the Y-axis direction) in the portions of the diffuser plate 450a that do not overlap the cold cathode tubes 70 (the empty area overlapping portions DN-1). The light reflectance in the short-side direction of the diffuser plate 450a is highest in the light source overlapping portions DA-1 (the points indicated by E and E' in FIGS. 18 and 19). The light reflectance decreases in the short-side direction of the diffuser plate 450a in a continuous and gradual manner toward the portion away from the light source overlapping portion DA-1 in the empty area overlapping portion DN-1. The light reflectance is smallest in a middle portion between the adjacent light source overlapping portions DA-1.

An area of each dot changes in the long-side direction of the diffuser plate 450a (a direction along the longitudinal direction of the cold cathode tube 70, the X-axis direction) as follows. An area of each dot of the light reflecting portion 50 is largest in portions of the diffuser plate 450a that correspond to middle portions of the cold cathode tubes 70 in the longitudinal direction. An area of each dot of the light reflecting portion 50 decreases in a continuous manner toward the ends of the cold cathode tube 70 and no light reflecting portion 50 is formed in short-side edge portions of the diffuser plate 450a. As illustrated in FIG. 20, the light reflectance in the long-side direction of the diffuser plate 450a is highest in the middle portion in the longitudinal direction of the cold cathode tube 70 (the point indicated by F in FIGS. 18 and 20) and is 50%. The light reflectance decreases in a continuous and gradual manner toward the ends of the cold cathode tube 70 (the point indicated by F'). The light reflectance is smallest in the short-side edge portions of the diffuser plate 450a and is 30%.

As explained before, in the present embodiment, the light reflectance of the diffuser plate 450a decreases from the middle portion toward the ends of the cold cathode tube 70 in its longitudinal direction.
With such a configuration, the light reflectance of the diffuser plate 450a is smaller on the end sides of the cold cathode tube 70 to which the light from the cold cathode tubes 70 is less likely to reach. This makes a relatively great amount of rays of light to transmit through the diffuser plate 450a and partial dark portions are less likely to be formed.

In the present embodiment, on the diffuser plate 450a, the light reflectance is relatively higher in the light source overlapping portions DA-1 than the empty area overlapping portions DN-1.
With such a configuration, light output from the cold cathode tubes 70 first reaches the light source overlapping portions DA-1 of the diffuser plate 450a that are the portions having the relatively high light reflectance. Therefore, most of the light reflects off the light source overlapping portions DA-1 (does not pass through the light source overlapping portions DA-1), and the brightness of illumination light is suppressed with respect to the light emission amount from the cold cathode tubes 70. On the other hand, the light that reflects off the light source overlapping portions DA-1 is further reflected in the chassis 14 and the light reaches the empty area overlapping portions DN-1. The light reflectance of the empty area overlapping portions DN-1 is relatively low and a larger amount of light passes through the empty area overlapping portions DN-1 and thus predetermined brightness of illumination light is achieved. This achieves power saving without arranging a plurality of cold cathode tubes 17 evenly in an entire area of the chassis 14 and substantially a uniform brightness distribution is achieved in the backlight device 12.

The cold cathode tubes 70 are used as the light source in the present embodiment, and this extends life of the light source and light dimming is easily performed.

### <Third Embodiment>

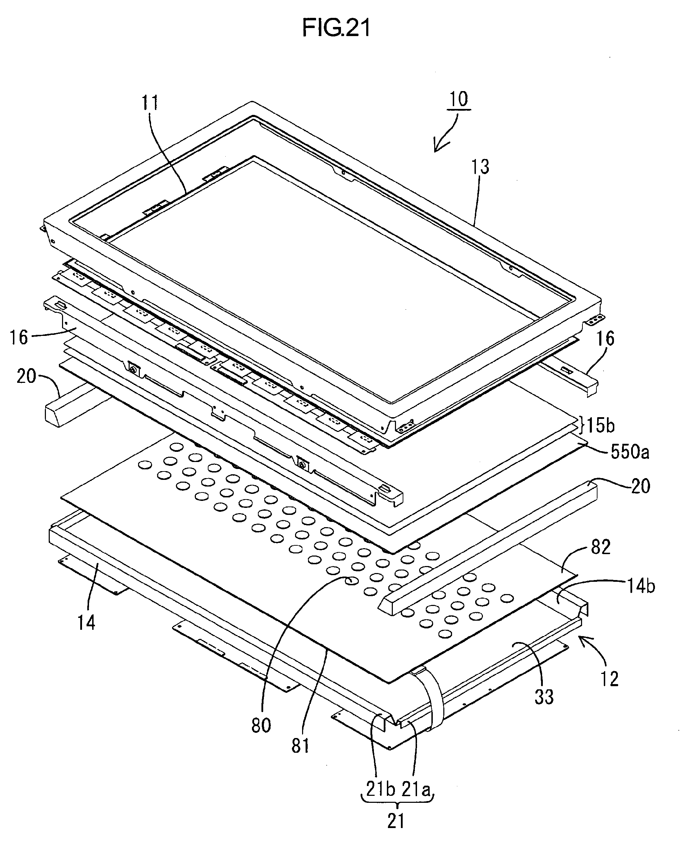

A third embodiment of the present invention will be explained with reference to FIGS. 21 to 25. In the third embodiment, the arrangement pattern of the light source is altered from the first embodiment and other configuration is similar to the first embedment. In the third embodiment, the same components and parts as the first embodiment are indicated by the same symbols and will not be explained.

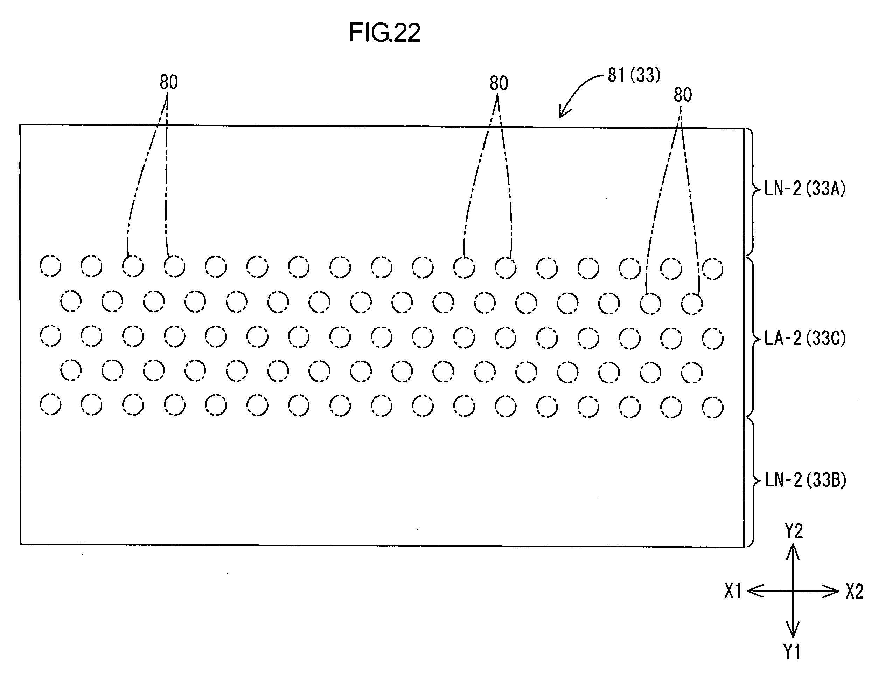

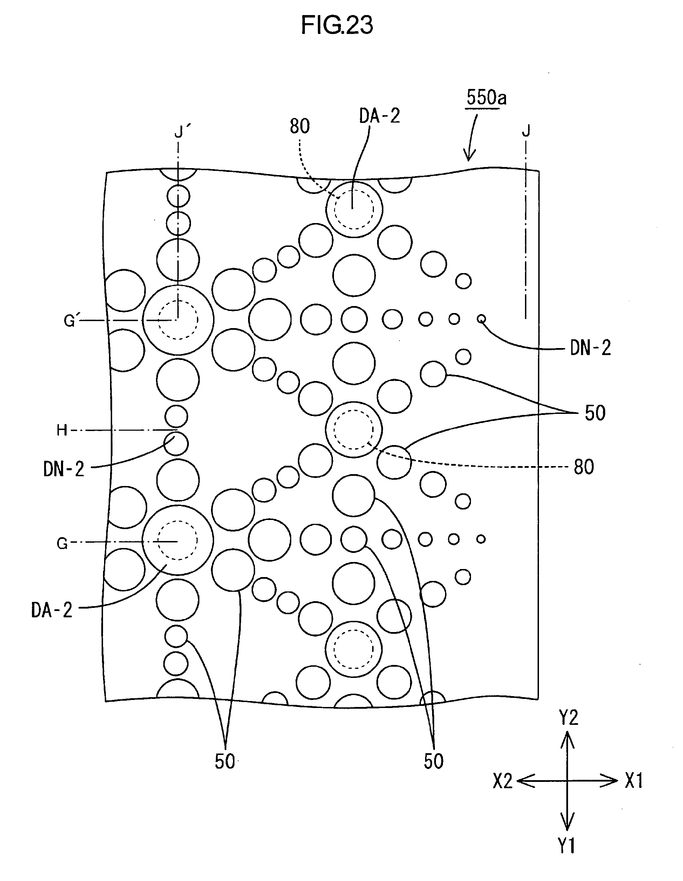

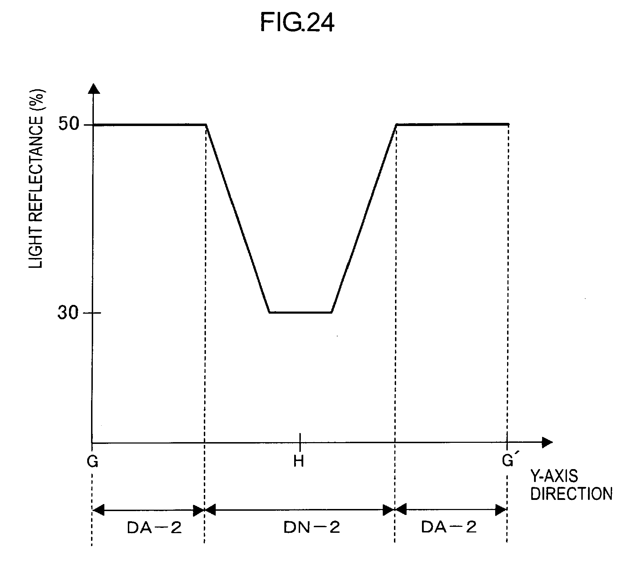

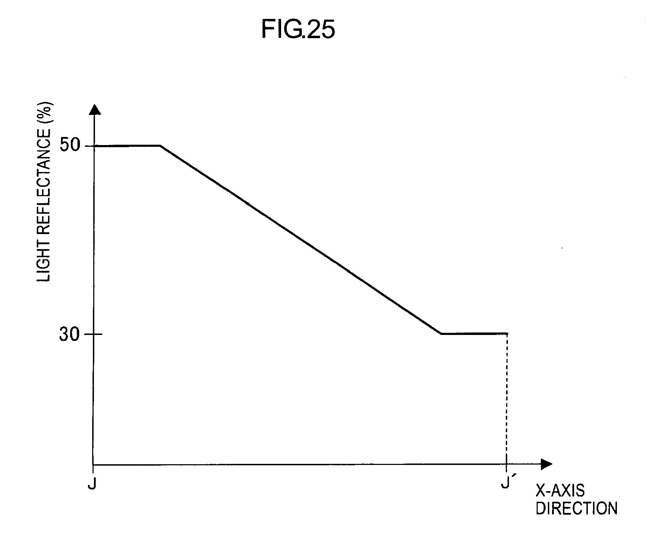

FIG. 21 is an exploded perspective view illustrating a general construction of a liquid crystal display device. FIG. 22 is a general plan view illustrating a chassis and an arrangement pattern of LED light sources. FIG. 23 is a typical view illustrating an arrangement pattern of a light reflecting portion formed on a diffuser plate on a surface facing the LED light sources. FIG. 24 is a graph illustrating a reflectance change in a G-G' line of the diffuser plate. FIG. 25 is a graph illustrating a reflectance change in a J-J' line of the diffuser plate. In FIG. 24, a horizontal axis shows the Y-axis direction (short-side direction) and the light reflectance is plotted on a graph from one point (indicated by G) to another point (indicated by G') in the Y-axis direction. In FIG. 25, a horizontal axis shows the X-axis direction (long-side direction) and the light reflectance is plotted on a graph from one point (indicated by J) to another point (indicated by J') in the X-axis direction.

An LED board 81 on which LED light sources (light sources) 80 are mounted is disposed on an inner surface side of the bottom plate 33 of the chassis 14, as illustrated in FIG. 21. The LED board 81 includes a light reflecting sheet 82 and a plurality of LED light sources 80. The light reflecting sheet 82 is disposed on a light output side surface of the LED board 81 that is a surface facing a diffuser plate 550a. The LED light sources 80 are arranged to be exposed from openings (not shown) formed in the light reflecting sheet 82. As illustrated in FIG. 22, the LED light sources 80 are arranged in lines along the long-side directions of the bottom plate 33 of the chassis 14. The LED board 81 is formed of one plate corresponding to the liquid crystal panel 11 in the present embodiment. However, the LED board 81 may be divided into several pieces and the divided pieces of LED boards 81 may be arranged on a plane surface.

The light reflecting sheet 82 provided on the LED board 81 is a synthetic resin sheet having a surface in white color that provides high light reflectivity. It is placed so as to cover almost entire surface of the LED board 81 except the portions in which the LED light sources 80 are arranged.

Each LED light source 80 emits white light. Each LED light source 80 may have three LED chips (not shown) each of which emits light of single color of red, green and blue or may have a blue LED chip and a yellow phosphor. As illustrated in FIG. 22, the LED light sources 80 are arranged in a middle portion 33C of a bottom plate 33 of the chassis 14 and a light source installation area LA-2 is formed in the middle portion 33C. A first end portion 33A and a second end portion 33B of the bottom plate 33 are empty areas LN-2 in which no LED light source 80 is arranged. The LED light sources 80 are arranged on a plane surface in a hexagonal close-packed arrangement. Therefore, each interval between the adjacent LED light sources 80, 80 is equal.

As illustrated in FIG. 23, the light reflecting portion 50 that has a white dot pattern is formed on the diffuser plate 550a on a surface facing the LED light sources 80. The dot pattern is formed by printing paste containing metal oxide (such as titanium oxide) on the surface of the diffuser plate 550a. The light reflecting portion 50 is formed such that an area of each dot changes in every area of the diffuser plate 550a. An area of each dot changes in the short-side direction of the diffuser plate 550a (a direction perpendicular to the longitudinal direction of the linearly arranged LED light sources 80, the Y-axis direction) as follows. The light reflecting portion 50 is formed on a portion of the diffuser plate 550a that overlaps the LED light source 80 (light source overlapping portion DA-2). The light reflecting portion 50 is formed by forming each dot all over the entire area of each light source overlapping portion DA-2. Further, the light reflecting portion 50 is also formed on portions of the diffuser plate 550a that do not overlap the LED light source 80 (empty area overlapping portion DN-2). In the empty area overlapping portion DN-2, the area of each dot continuously reduces in a direction away from the light source overlapping portion DA-2. In a portion of the diffuser plate 550a furthest from the light source overlapping portion DA-2, that is, a portion that overlaps a middle portion between the adjacent LED light sources 80, 80 (indicated by H in FIGS. 23 and 24), a dot area of the light reflecting portion 50 is smallest. The light reflectance is highest in the light source overlapping portions DA-2 in the short-side direction of the diffuser plate 550a. The light reflectance in the short-side direction of the diffuser plate 550a decreases in a continuous and gradual manner toward the portion away from the light source overlapping portion DA-2 in the empty area overlapping portion DN-2.

In the long-side direction of the diffuser plate 550a (a direction along the longitudinal direction of the linearly arranged LED light sources 80, the X-axis direction), an area of each dot of the light reflecting potion 50 is largest in the middle portion in the longitudinal direction of the linearly arranged LED light sources 80 and decreases in a continuous manner toward the end sides in the longitudinal direction of the linearly arranged LED light sources 80. No light reflecting portion 50 is formed on the short-side edge portions of the diffuser plate 550a. The light reflectance changes in the long-side direction of the diffuser plate 550a. As illustrated in FIG. 25, the light reflectance is 50% that represents a highest value in the middle portion in the linearly arranged LED light sources 80 (indicated by J in FIGS. 23 and 25). The light reflectance decreases in a continuous and gradual manner toward the ends in the linearly arranged LED light sources 80. The light reflectance is 30% that represents a lowest value in the short-side edge portions (indicated by J').

As explained before, in the present embodiment, the light reflectance of the diffuser plate 550a decreases from the middle portion to the end portions in the linearly arranged LED light sources.
With such a configuration, the light reflectance of the diffuser plate 550a is smaller on the end sides to which the light from the LED light source 80 is less likely to reach. This makes a relatively great amount of rays of light to transmit through the diffuser plate 550a and partial dark portions are less likely to be formed.

In the present embodiment, on the diffuser plate 550a, the light reflectance is relatively higher in the light source overlapping portion DA-2 than the empty area overlapping area DN-2.
With such a configuration, light output from the LED light source 80 first reaches the light source overlapping portion DA-2 of the diffuser plate 550a that is the portion having the relatively high light reflectance. Therefore, most of the light reflects off the light source overlapping portion DA-2 (does not pass through the light source overlapping portion DA-2), and the brightness of illumination light is suppressed with respect to the light emission amount from the LED light source 80. On the other hand, the light that reflects off the light source overlapping portion DA-2 is reflected in the chassis 14 again and the light reaches the empty area overlapping portion DN-2. The light reflectance of the empty area overlapping portion DN-2 is relatively low and a larger amount of light passes through the empty area overlapping portion DN-2 and thus predetermined brightness of illumination light is achieved. This achieves power saving without arranging the LED light sources 80 evenly in an entire area in the chassis 14 and substantially a uniform brightness distribution is achieved in the backlight device 12.

The linearly arranged LED light sources 80 are used as the light source in the present embodiment, and this extends life of the light source and reduces power consumption.

### [Modification of Third Embodiment]

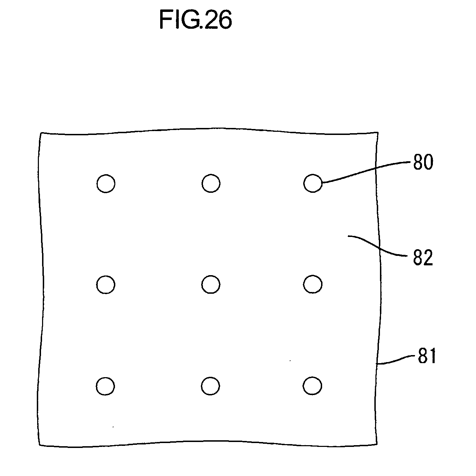

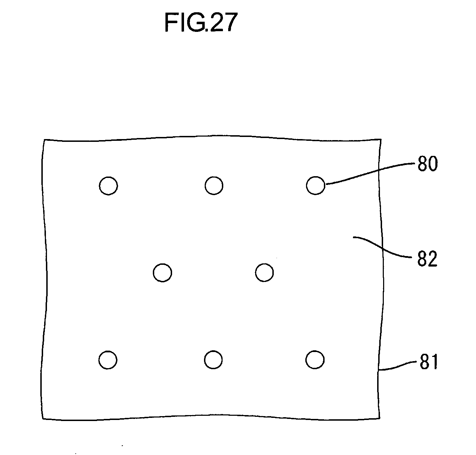

The LED light sources 80 may be arranged on the LED board 81 as illustrated in FIGS. 26 or FIG. 27 as a modification of the third embodiment. In the third embodiment, the LED light sources 80 are arranged in a hexagonal close-packed arrangement such that the adjacent LED light sources 80 are arranged at equal intervals. However, as illustrated in FIG. 26, the LED light sources 80 may be arranged vertically and horizontally to be arranged in a grid. Also, as illustrated in FIG. 27, the LED light sources 80 may be arranged vertically and horizontally to be arranged in a staggered arrangement such that the adjacent LED light sources 80 are offset from each other.

### <Other Embodiments>

The embodiments of the present invention have been described, however, the present invention is not limited to the above embodiments explained in the above description and the drawings. The following embodiments may be included in the technical scope of the present invention, for example.

(1) In the first embodiment, one hot cathode tube is arranged. A plurality of hot cathode tubes may be arranged.

(2) In the second embodiment, six cold cathode tubes are arranged. The number of cold cathode tubes may be altered, if necessary. For example, four or eight cold cathode tubes may be arranged.

(3) In the first and second embodiments, a hot cathode tube or a cold cathode tube that is a kind of a fluorescent tube (a linear light source) is used as the light source. Other different kinds of fluorescent tubes may be used as the light source. Discharge tubes other than fluorescent tubes (such as a mercury lamp) may be used as the light source.

(4) In the third embodiment, the LED that is a kind of a point light source is used as the light source. Other kinds of point light sources may be used as the light source. A planer light source such as an organic EL may be used as the light source.

(5) In the above embodiments, one kind of light source is used. A plurality kinds of light sources may be used. In one lighting device, a hot cathode tube and a cold cathode tube may be used, or a hot cathode tube and an LED may be used, or a cold cathode tube and an LED may be used, or a hot cathode tube, a cold cathode tube and an LED may be used.

(6) In the above embodiments, each dot of the dot pattern of the first light reflecting portion and the second light reflecting portion is formed in a round. However, the shape of each dot is not limited thereto but may be any shape such as a square or a polygonal shape.

(7) In the above embodiments, the optical sheet set includes a combination of a diffuser plate, a diffuser sheet, a lens sheet and a reflective polarizing plate. Two diffuser plates may be layered as optical sheets.

(8) In the above embodiments, the first reflecting portion and the second reflecting portion are formed on a surface of the diffuser plate that faces the light source. The first reflecting portion and the second reflecting portion may be formed on the diffuser plate on a surface opposite from the light source.

(9) In the above embodiments, the light source installation area is provided in the middle portion of the bottom plate of the chassis. The light source installation area may be provided in any other positions according to the amount of rays of light from the light source and use conditions of the backlight device. The light source installation area may be provided in end portions of the bottom plate or may be provided in the middle portion and one end portion of the bottom plate.

(10) In the above embodiments, the light source installation area is provided in a portion of the bottom plate of the chassis. The light source installation area may be provided in an entire area of the bottom plate.

### EXPLANATION OF SYMBOLS

10: Liquid crystal display device (Display device), 11: Liquid crystal panel (Display panel), 12: Backlight device (Lighting device), 14: Chassis, 14b: Opening of chassis, 15a: Diffuser plate (Optical member, Light scattering member, 17: Hot cathode tube (Light source), 30A: First end portion of bottom plate of chassis, 30B: Second end portion of bottom plate of chassis, 30C: Middle portion of bottom plate of chassis, 50: Light reflecting portion, 70: Cold cathode tube (Light source), 80: LED light source (Light source), DA: Light source overlapping portion, DN: empty area overlapping portion, EA: Luminous range, LA: Light source installation area, LN: Empty area, TV: Television receiver.

## Claims

1. A lighting device comprising:
a linearly formed light source;
a chassis configured to house the light source and have an opening for light from the light source to pass through; and
an optical member provided to face the light source and cover the opening, the optical member having different light reflectance in a longitudinal direction of the light source.

2. The lighting device according to claim 1, wherein the light reflectance of the optical member decreases from a middle portion to ends in the longitudinal direction of the light source.

3. The lighting device according to any one of claims 1 and 2, the light reflectance of the optical member changes in a direction perpendicular to the longitudinal direction of the light source.

4. The lighting device according to any one of claims 1 to 3, wherein:
the optical member includes a light source overlapping portion that overlaps the light source and an empty area overlapping portion that does not overlap the light source; and
at least in the light source overlapping portion, the light reflectance decreases from a middle portion to ends in the longitudinal direction of the light source.

5. The lighting device according to claim 4, wherein the light reflectance is relatively higher in the light source overlapping portion than in the empty area overlapping portion.

6. The lighting device according to any one of claims 1 to 4, wherein the light reflectance of the optical member decreases in a continuous and gradual manner from a portion having high light reflectance to a portion having low light reflectance.

7. The lighting device according to any one of claims 1 to 4, wherein the light reflectance of the optical member decreases in a stepwise and gradual manner from a portion having high light reflectance to a portion having low light reflectance.

8. The lighting device according to any one of claims 1 to 7, wherein a length of a luminous range of the light source from which light is emitted is smaller than a length of the optical member in the longitudinal direction of the light source.

9. The lighting device according to any one of claims 1 to 8, wherein:
the chassis has a surface facing the optical member and including at least a first end portion, a second end portion, and a middle portion, the second end portion being located at an end away from the first end portion, and the middle portion being located between the first end portion and the second end portion;
at least one of the first end portion, the second end portion and the middle portion is configured as a light source installation area in which the light source is arranged, and the rest is configured as an empty area in which no light source is arranged.

10. The lighting device according to claim 9, wherein in the chassis, the light source installation area is smaller than the empty area.

11. The lighting device according to one of claims 9 and 10, wherein the light source installation area is provided in the middle portion of the chassis.

12. A display device comprising:
the lighting device according to any one of claims 1 to 11; and
a display panel configured to provide display using light from the lighting device for a display device.

13. The display device according to claim 12, wherein the display panel is a liquid crystal display panel using liquid crystal.

14. A television receiver comprising the display device according to any one of claims 12 and 13.
